# EUROPÄISCHE PATENTSCHRIFT

(11) **EP 1 847 898 B1**
(45) Veröffentlichungstag und Bekanntmachung des Hinweises auf die Patenterteilung: **22.01.2014**
(21) Anmeldenummer: 07101377.5
(22) Anmeldetag: 30.01.2007
(51) Int. Cl.: G05D 1/02

(54) **Verfahren zur Aufzeichnung von Fahrwegdaten eines landwirtschaftlichen Maschinensystems**
Method for recording the path of travel of an agricultural machine
Procédé d'enregistrement de données représentant le chemin emprunté par une machine agricole

(30) Priorität: 21.04.2006 DE 102006019188
(43) Veröffentlichungstag der Anmeldung: 24.10.2007
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE); Brunnert, Andreas, 33397 Rietberg (DE); Meyer zu Helligen, Lars Peter, 32139 Spenge (DE); Nienaber, Gerhard, 59320 Ennigerloh (DE)
(74) Vertreter: Ellerbrächter, Dirk

(56) Entgegenhaltungen:
- EP-A1- 1 548 531
- EP-A2- 0 821 296
- DE-B3- 10 250 694
- US-E1- R E37 574

## Beschreibung

Die Erfindung betrifft ein Verfahren zur Aufzeichnung von Fahrwegdaten eines landwirtschaftlichen Maschinensystems auf einem zu bearbeitenden Territorium, eine entsprechende Fahrwegaufzeichnungseinrichtung zur Durchführung eines solchen Verfahrens sowie ein Verfahren zur Steuerung eines landwirtschaftlichen Maschinensystems auf Basis der aufgezeichneten Fahrwegdaten.

Nachdem die Leistungsfähigkeit landwirtschaftlicher Maschinensysteme, d. h. von Arbeitsfahrzeugen, z. B. Mähdreschern, Feldhäckslern oder Scheppern mit diversen Anbauten wie Düngerstreuern, Sämaschinen, Spritzeinrichtungen, Wendern, Schwadern etc, stark gesteigert wurde, gewinnt in den letzten Jahren die Planung des Arbeitsablaufs immer mehr an Bedeutung. Für die einzelnen Arbeitseinsätze steht insbesondere bei der Ernte oft wetterbedingt nur ein begrenzter Arbeitszeitraum zur Verfügung, der häufig wegen einer mangelnden Einsatzplanung nicht optimal ausgenutzt wird. Darüber hinaus ist eine präzise Einsatzplanung wichtig, um die theoretisch mögliche maximale Leistungsfähigkeit der Maschinen auch im praktischen Einsatz zu erreichen. Um dieses Ziel einer optimalen Durchführung des Arbeitseinsatzes zu erreichen, wurden sog. Routenplanungssysteme und -verfahren entwickelt, mit denen für das jeweilige Maschinensystem eine optimale Route bei der Bearbeitung des betreffenden Territoriums, d. h. eines bestimmten Schlages, ermittelt wird. Das Verfahren des betreffenden Maschinensystems entlang dieser Route kann dann je nach Ausgestaltung des Maschinensystems vollautomatisch, d, h. durch eine Lenkautomation, halbautomatisch oder manuell mit Unterstützung durch eine geeignete Anzeigevorrichtung erfolgen, bei der der Benutzer versuchen muss, das Fahrzeug auf einer virtuellen Fahrlinie zu halten. Üblicherweise arbeiten solche Routenplanungssysteme bzw. Lenkautomaten mit satellitengestützten Navigationseinrichtungen, beispielsweise mit Hilfe von GPS-Empfängern (GPS = Global Positioning System) Zur Verbesserung der Genauigkeit gibt es verschiedene Korrekturverfahren, wie beispielsweise für ein GPS-Verfahren das sog. DGPS (Differentielles GPS).

Für eine optimale Routenplanung müssen eine Vielzahl von fahrtechnischen und/oder bearbeitungstechrischen Daten des zu befahrenden bzw. zu bearbeitenden Geländes zusammengetragen werden, Hierzu ist es in der Regel notwendig, dass auch bereits abgefahrene Wegstrecken aufgezeichnet werden. Für die derzeit existierenden Spurführungssysteme werden die zurückgelegten Wegstrecken vollständig aufgenommen. Dabei besteht für den Fahrer lediglich die Möglichkeit, die Aufzeichnung manuell abzuschalten bzw. einzuschalten. Bei der Aufzeichnung dieses Fahrwegs werden zwangsläufig auch unerwünschte bzw. unnötige Streckenbereiche aufgezeichnet, wie beispielsweise Wendevorgänge an den Schlagenden, Diese Streckenbereiche sind weder für eine Berechnung einer optimalen Route noch für eine spätere Spurfindung durch den Fahrer notwendig, sondern erschweren diese eher. Zwar wird in der EP 0 860 688 B1 ein Verfahren beschrieben, bei dem Kartendaten ereignisgesteuert dargestellt werden können, um einen Bediener nicht mit unnötigen Informationen zu belasten, sondern ihm auf einer Anzeige zur Befahrung eines Gebiets nur die für die jeweilige Fahrt wesentlichen Daten zu zeigen. Jedoch wird auch hierfür zunächst ein erheblicher Speicherplatz benötigt, um alle Daten zu speichern. Des Weiteren ist ein außerordentlich hoher Rechenaufwand notwendig, um die wesentlichen von den unwesentlichen Daten zu trennen, d.h. um aus den gespeicherten Daten die relevanten herauszusuchen. Folglich wird bei diesem Verfahren nicht nur die Speicherkapazität, sondern auch die Rechenkapazität des Systems unnötig belastet.

Aus der DE 102 50 694 ist ein Verfahren zur Steuerung eines landwirtschaftlichen Fahrzeugs bekannt geworden, bei dem Fahnrvegdaten zeit- und/oder weg- und/oder ereignisrelevant aufgezeichnet werden. Derartige Systeme haben den Nachteil, dass sie alle, die Fahrwegstrecke betreffenden Daten aufzeichnen, sodass neben einer großen zu managenden Datenmenge eine Vielzahl von Informationen an einer Anzeigeeinrichtung visualisiert werden. Dies führt einerseits dazu, dass umfangreiche und damit kostenintensive Speicherkapazitäten vorgehalten werden müssen und zudem der Fahrer der landwirtschaftlichen Arbeitsmaschine sehr konzentriert und damit schnell ermüdend die Vielzahl von visualisierten Informationen erfassen muss.

Es ist daher eine Aufgabe der vorliegenden Erfindung, ein verbessertes Verfahren zur Aufzeichnung von Fahrwegdaten eines landwirtschaftlichen Maschinensystems sowie eine entsprechende Fahrwegaufzeichnungseinhchtung für ein landwirtschaftliches Maschinensystem zu schaffen, welches effektiver und somit auch kostengünstiger arbeitet und welches nachgeschaltete Routenptanungssysteme, Lenkautomaten sowie den Fahrer bei einer manuellen Fahrt mit Hilfe einer gemäß den aufgezeichneten Fahrwegdaten gesteuerten Anzeigeeinrichtung nicht unnötig belastet.

Diese Aufgabe wird durch ein Verfahren gemäß Patentanspruch 1 sowie durch eine Fahrwegaufzeichnungseinrichtung gemäß Patentanspruch 11 gelöst.

Bei dem erfindungsgemäßen Verfahren werden während der Fahrt des landwirtschaftlichen Maschinensystems kontinuierlich oder in zeitlichen Abständen mittels einer Positionsbestimmungseinrichtung automatisch aktuelle Positionsdaten des Maschinensystems erfasst und auf den erfassten Positionsdaten basierende Fahrwegdaten, welche einen vom Maschinensystem abgefahrenen Fahrweg repräsentieren, in einer Speichereinrichtung hinterlegt. Dabei erfolgt erfindungsgemäß eine Aktivierung der Aufzeichnung der Fahrwegdaten automatisch ereignisgesteuert.

Eine erfindungsgemäße Fahrwegaufzeichnungseirinchtung zur Durchführung dieses Verfahrens benötigt neben einer Positionsdatenermittlungseinrichtung, mit der automatisch die aktuellen Positionsdaten des Maschinensystems erfasst werden können, eine Positionsdatenbearbeitungseinrichtung, um basierend auf den erfassten Positionsdaten Fahrwegdaten zu ermitteln, und eine Speichereinrichtung für die Fahrwegdaten, Erfindungsgemäß wird außerdem eine Ereignisdetekhonseinheit benötigt, um ein Eintreten bestimmter Ereignisse zu detektieren, und eine Aktivierungseinheit, welche in Abhängigkeit vom Eintritt eines bestimmten Ereignisses oder einer Ereigniskombination eine Aufzeichnung von Fahrwegdaten automatisch aktiviert oder deaktiviert.

Eine automatische ereignisgesteuerte Aktivierung der Aufzeichnung der Fahrwegdaten hat den Vorteil, dass je nach Einstellung nur die Fahrwegdaten aufgezeichnet werden, die wirklich für die nachfolgende Bearbeitung benötigt werden. Nicht verwendbare, das System belastende Fahrwegdaten werden dagegen gar nicht aufgezeichnet.

Bei den Fahrwegdaten kann es sich um aufbereitete Positionsdaten, z. B. mit Interpolationswerten zwischen den erfassten Positionsdaten, oder um Vektoren handeln. Grundsätzlich kann es sich aber auch einfach um eine Kette der unmittelbar erfassten Positionsdaten handeln.

Die abhängigen Ansprüche und die weitere Beschreibung enthalten besonders vorteilhafte Ausgestaltungen und Weiterbildungen der Erfindung, wobei die erfindungsgemäße Fahrwegaufzeichnungseinrichtung auch entsprechend den abhängigen Verfahrensansprüchen weitergebildet sein kann.

Für die ereignisgesteuerte Aktivierung können vorzugsweise während einer Fahrt des landwirtschaftlichen Maschinensystems kontinuierlich oder in zeitlichen Abständen Sensorwerte gemessen werden, die einen Maschinenzustand oder einen Zustand des zu bearbeitenden Territoriums repräsentieren. Die Aktivierung der Aufzeichnung der Fahrwegdaten erfolgt dann in Abhängigkeit von den ermittelten Sensorwerten. Hierzu sind entsprechende Sensoren am Maschinensystem angebracht. Sensorwerte, die den Maschinenzustand repräsentieren, können beispielsweise ein gemessener Schlupf, die Werte eines Kraftaufnehmers oder der Kraftstoffverbrauch sein Sensorwerte, mit denen der Zustand des zu bearbeitenden Territoriums ermittelt wird, sind z. B. die Sensorwerte eines Körnersensors, Ergebnisse einer Reifegradmessung, Messwerte für den Unkrautbesatz oder die Nährsioffversorgung,

Besonders bevorzugt erfolgt eine Aktivierung der Aufzeichnung der Fahrwegdaten in Abhängigkeit von einer Fahrtrichtung, d. h. Vorwärts- oder Rückwärtsfahrt des Maschinensystems.

Alternativ oder zusätzlich kann die Aufzeichnung auch in Abhängigkeit von einer Betriebsart des Maschinensystems erfolgen, beispielsweise abhängig davon, ob ein Implement ein- oder ausgestellt ist. Z. B. kann die Aufzeichnung in Abhängigkeit davon erfolgen, ob eine angebaute Feldspritze sprüht, ob ein Gruber durch den Boden gezogen wird oder ein Autopilot ein- oder ausgestellt ist.

Ebenso kann aber auch eine Fahrwegaufzeichnung in Abhängigkeit von einer dem Maschinensystem zugeordneten, definierten Eigenschaft erfolgen, beispielsweise abhängig davon, ob das betreffende Maschinensystem innerhalb eines Arbeitsverbands eine "Master-Maschine" ist, von der aus andere Maschinen gesteuert werden, oder ob es sich um eine "Client-Maschine" handelt, welche anderen Maschinensystemen untergeordnet ist.

Für die Aufzeichnung der Fahrwegdaten in Abhängigkeit von einer Fahrtrichtung kann die Ereignisdetektionseinheit beispielsweise mit einem Fahrtrichtungsanzeiger oder einer Fahrtrichtungs-Vofgabeeinrichtung verbunden sein. Im Übrigen kann die Ereignisdetektionseinrichtung auch mit einer Steuereinrichtung des Maschinensystems so gekoppelt sein, dass es von dort entsprechende Daten erhält, ob z. B. ein Implement ist oder der Autopilot ein- oder ausgeschaltet ist.

Ein weiteres Ereignis, auf dessen Basis eine automatische Aktivierung bzw. Deaktivierung der Fahrwegaufzeichnung möglich ist, kann darin gesehen werden, welcher Bereich des Territoriums gerade überfahren wird. So kann beispielsweise voreingestellt sein, dass nur in ausgewählten vordefinierten Bereichen eine Fahrwegaufzeichnung erfolgt, beispielsweise nicht innerhalb eines Vorgewendebereichs oder eines Randbereichs. Als eine Art "Sensorwerte" können hierbei auch die von der Positionsbestimmungseinrichtung kommenden, aktuellen Positionsdaten herangezogen werden, die mit einer vorgegebenen Karte verglichen werden. Entsprechend sollte das landwirtschaftliche Maschinensystem in diesem Fall eine Kartenvergleichseinrichtung aufweisen, welche durch einen Vergleich der aktuellen Positionsdaten mit einer vorgegebenen Karte prüft, ob sich die Maschine in einem bestimmten Bereich des Territoriums befindet.

Vorzugsweise ist die ereignisgesteuerte, automatische Aktivierung von einem Bediener konfigurierbar. Besonders bevorzugt ist es aber auch möglich, dass der Bediener vor einer Fahrt die Abhängigkeiten festlegt, d. h. bei welchen Ereignissen bzw. Ereigniskombinationen ein Fahrweg aufgezeichnet werden soll und bei welchen Ereignissen bzw. Ereigniskonibinzationen keine Fahrwegaufzeichnung erfolgen soll, Vorzugsweise kann der Bediener die Automatik auch jederzeit manuell übersteuern, indem er die Aufzeichnung manuell ein- und wieder ausstellt,

Bei einer besonders vorteilhaften und daher bevorzugten Weiterbildung des Verfahrens wird bei Auftreten eines bestimmten Ereignisses während einer Fahrt oder eines Arbeitsvorgangs auf dem Territorium eine Markierung in einem elektronischen Karteninforrnationssystem oder dergleichen gesetzt, indem Positionsdaten für den geographischen Ort des Ereignisses ermittelt und gespeichert werden. Dabei werden zusätzlich ereignisspezifische Ergänzungsdaten zur eindeutigen Identifizierung des Ereignisses so gespeichert, dass sie der betreffenden Markierung zugeordnet sind.

Bei einem solchen Ereignis kann es sich z. B. um eine Unterbrechung der Bearbeitung wegen einer Störung handeln, beispielsweise weil bei einem Spritzvorgang der Spritztank leer ist. Bei den ereignisspezifischen Ergänzungsdaten handelt es sich dann z. B. um Informationen darüber, in welcher Reihe und in welcher Fahrtrichtung das Ereignis stattgefunden hat, welcher Fahrer gefahren ist, zu welchem Zeitpunkt, d. h, zu welchem Datum und zu welcher Uhrzeit, das Ereignis aufgetreten ist u. s. w.

Zwar besteht auch bei heutigen GPS-gestützten Ertragskartierungen die Möglichkeit, Wegmarkierungen zu speichern. Dabei werden jedoch die Positionskoordinaten nur zu dem Zeitpunkt gespeichert, an dem die Wegmarkierung gesetzt wird. Ein Wiederfinden von gespeicherten Wegmarkierungen wird nur mit der Anzeige des Punktes auf einem Kartendisplay und/oder mit der Angabe der Richtung vom Fahrzeug zum gespeicherten Punkt unterstützt. Allenfalls wird noch die Entfernung zwischen Fahrzeug und dem wiederzufindenden Punkt angegeben. Auf einem freien Feld können so gespeicherte Wegmarkierungen zwar ohne weiteres wieder angefahren werden. Jedoch ist es nicht ohne zusätzliche Mühe möglich, auf einem Feld mit Bestand den Punkt eindeutig wiederzufinden bzw, schnell anzufahren. In der Regel muss dann der Fahrer zusätzliche Informationen notieren und zum Wiederanfahren des Punktes mühsam die einzelnen Reihen abzählen, Oft sind hierzu - insbesondere bei stark geschwungenen Fahrspuren - erhebliche Kenntnisse über das Gelände erforderlich.

Durch die zugeordnete automatische Speicherung von ereignisspezifischen Ergänzungsdaten wird das Wiederanfahren solcher Punkte, an denen Wegmarkierungen gesetzt wurden, erheblich erleichtert. Ein derartiges Verfahren zur Markierung einer Position bei Auftreten eines bestimmten Ereignisses während einer Fahrt und/oder eines Arbeitsvorgangs mit einer Speicherung von ereignisspezifischen Ergänzungsdaten kann daher auch als weitere Erfindungsidee gesehen werden.

Die zusätzlichen Informationen können auch bevorzugt in einer Anzeige, d. h. in einer kartographischen Darstellung des Geländes, für den Fahrer verarbeitet werden. Dadurch kann die Übersicht für den Fahrer erleichtert werden, indem dieser die Markierungen einfacher zuordnen kann. In Kombination mit einem passenden Anzeigemanagement kann folglich das Wiederfinden solcher Punkte im Gelände noch weiter verbessert werden.

Um solche, ereignisspezifischen Ergänzungsdaten aufzuzeichnen, benötigt die Fahrwegaufzeichnungseinrichtung eine entsprechende Ermittlungseinrichtung. Dabei können z. T. auch die bereits genannten Sensoren und zusätzliche, in der Regel ohnehin in entsprechenden Steuerungs- bzw. Fahrwegaufzeichnungseinrichtungen befindliche Einrichtungen wie Zeitgeber etc. verwendet werden. Darüber hinaus können auch vom Fahrer eingegebene Daten, beispielsweise ein Name oder eine Kennung des aktiven Fahrers, aus einer Speichereinrichtung herangezogen werden, oder der Fahrer wird - ggf. auch über eine entsprechende Benutzerschnittstelle - aufgefordert, zusätzliche Daten einzugeben.

Wie bereits eingangs erwähnt, werden die aufgezeichneten Fahrwegdaten besonders bevorzugt zur Steuerung des betreffenden Maschinensystems selbst oder auch eines anderen landwirtschaftlichen Maschinensystems auf dem zu bearbeitenden Territorium während eines Fahrt- oder Arbeitsvorgangs genutzt. Dabei erfolgt die Steuerung mittels eines Routenanzeigesystems (üblicherweise auch Spurführungssysteme genannt) und/oder einer automatischen Fahrsteuerung (üblicherweise auch Lenkautomat), wobei das Routenanzeigesystem und/oder die automatische Fahrsteuerung dann auf Basis der erfindungsgemäß aufgezeichneten Fahrwegdaten gesteuert werden.

Hierzu benötigt das landwirtschaftliche Maschinensystem ein entsprechendes mit der Fahrwegaufzeichnungseinrichtung gekoppeltes Routenanzeigesystem und/oder eine automatische Fahrsteuerung. Bevorzugt weist das landwirtschaftliche Maschinensystem auch ein eigenes Routenplanungssystem auf, mit dem auf Basis von aufgezeichneten Fahrwegdaten eine neue Route geplant werden kann.

Sofern eine bestimmte geographische Position, an dem eine Markierung gesetzt wurde, wieder angefahren werden soll, wird dann das Routenanzeigesystem und/oder die automatische Fahrsteuerung entsprechend auf Basis der Positionsdaten der Markierung sowie unter Nutzung der der Markierung zugeordneten ereignisspezifischen Ergänzungsdaten gesteuert.

Die Erfindung wird im Folgenden unter Hinweis auf die beigefügten Figuren anhand von Ausführungsbeispielen noch einmal näher erläutert, Hieraus ergeben sich auch weitere Einzelheiten und Vorteile der Erfindung. Es zeigen:
Figur 1 eine schematische Darstellung eines landwirtschaftlichen Maschinensystems mit einem Ausführungsbeispiel einer erfindungsgemäßen Fahrwegaufzeichnungseinrichtung,
Figuren 2a bis 2c eine schematische Darstellung einer Fahwegaufzeichnung nach dem Stand der Technik (Figur 2a) im Vergleich mit ereignisgesteuerten Fahrwegaufzeichnungen gemäß zwei Ausführungsbeispielen der Erfindung (Figuren 2b und 2c),
Figur 3 eine Darstellung eines Schlages mit mehreren Fahrspuren und Markierungen,
Figur 4 verschiedene Darstellungsmöglichkeiten für eine Anzeige unterschiedlicher Markierungen.

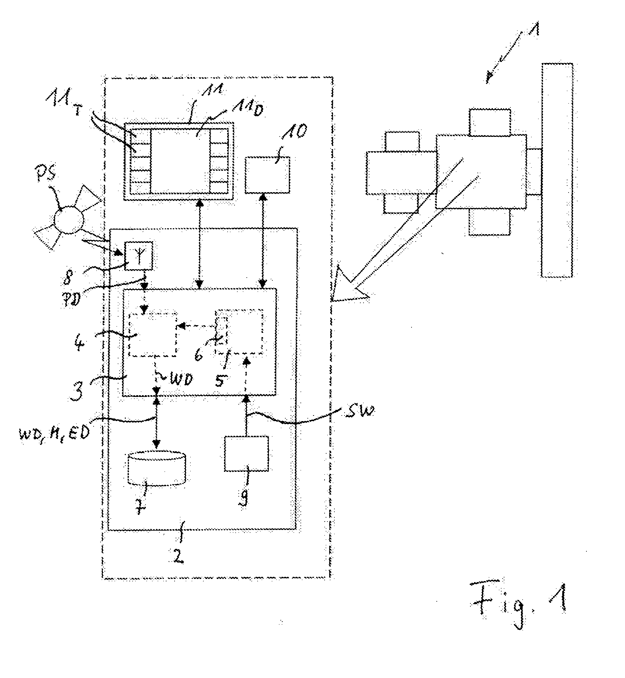

Bei dem in Figur 1 schematisch dargestellten landwirtschaftlichen Maschinensystem 1 handelt es sich um einen Mähdrescher 1, welcher eine erfindungsgemäße Fahrwegaufzeichnungseinrichtung 2 aufweist. Der generelle Aufbau und die Funktionsweise eines Mähdreschers 1 sind dem Fachmann ebenso wie geeignete Steuerungssysteme zur Steuerung des Mähdreschers 1 und herkömmliche Fahrwegaufzeichnungseinrichtungen grundsätzlich bekannt. Daher sind in Figur 1 nur noch die zur Erläuterung der Erfindung wesentlichen Komponenten einer erfindungsgemäßen Fahrwegaufxetchnungseinrichtung 2 schematisch dargestellt.

Zu den Komponenten der Fahrwegaufzeichnungseinrichtung 2 zählt hier zum einen eine Positionsermittlungseinrichtung 8, beispielsweise ein GPS-Empfänger, weicher von geeigneten Positionssatelliten PS GPS-Signale erhält, Vorzugsweise handelt es sich um einen GPS-Empfänger, welcher in einem korrigierten satellitengestützten System arbeitet, beispielsweise mit DGPS oder Ähnlichem, um eine möglichst exakte Positionsbestimmung durchzuführen, bevorzugt auf wenige Zentimeter genau,

Ein weiterer Teil der Fahrwegaufzeichnungseinrichtung 8 ist hier ein Prozessor 3, auf dem eine Positionsdatenbearbeitungseinrichtung 4, eine Ereignisdetektionseinheit 5 und eine Aktivierungseinheit 6 in Form von Softwaremodulen realisiert sind.

Weiterhin gehören zu der Fahrwegaufzeichnungseinrichtung 2 eine Speichereinrichtung 7 sowie geeignete Sensoren 9, hier vereinfacht dargestellt durch nur einen Sensorblock, welche Sensorwerte SW an die Ereignisdetektionseinheit 5 liefern.

Auf dem Prozessor 3 können darüber hinaus noch weitere Einheiten in Form von Software realisiert sein, wie beispielsweise eine Routenplanungseinrichtung, die hier jedoch nicht dargestellt ist. Geeignete Routenplanungssysteme sind beispielsweise aus der EP 0 821 296 A1 und der DE10 2004 027 242 A2 bekannt, auf die hier voll inhaltlich verwiesen wird.

Die Fahrwegaufzeichnungseinrichtung 2 nutzt außerdem eine Benutzerschnittstelle 11, die mit dem Prozessor 3 gekoppelt ist, Diese Benutzerschnittstelle 11 besteht hier aus einem Touchdisplay mit einem Anzeigebereich 11_{D} und seitlich angeordneten virtuell dargestellten Tasten 11_{T}. Wenn der Benutzer das Display 11 in dem Bereich einer Taste 11_{T} berührt, kann er bestimmte Eingaben tätigen bzw. bestimmte Aktionen ausführen.

Außerdem ist der Prozessor 3 mit einer automatischen Fahrsteuerung 10 (im folgenden auch "Lenkautomat" genannt) gekoppelt, so dass beispielsweise von einer auf dem Prozessor 3 realisierten Routenplanungseinrichtung geplante Routen mit Hilfe des Lenkautomaten 10 automatisch abgefahren werden können.

Die Komponenten auf dem Prozessor 3 arbeiten wie folgt zusammen; Die von der Positionsdatenermittlungseinrichtung 8 erfassten Positionsdaten PD werden zunächst an die Positionsdatenbearbeitungseinrichtung 4 übergeben. Diese ermittelt basierend auf den Positionsdaten PD Fahrwegdaten WD, indem sie beispielsweise die Strecken zwischen den einzelnen Positionsdaten PD interpoliert Diese Fahrwegdaten WD werden dann in einer Speichereinrichtung 7 hinterlegt. Angesteuert wird diese Positionsdatenbearbeitungseinrichtung 4 von einer Aktivierungseinheit 6, welche mit einer Ereignisdetektionseinheit 5 zusammenwirkt. Diese Ereignisdetektionseinheit 5 erhält Sensorwerte SW von verschiedenen Sensoren 9 und detektiert so den Eintritt bestimmter Ereignisse. Zusätzlich kann diese Ereignisdetektionseinheit 5 aber auch andere Werte erhalten, beispielsweise Steuerbefehle für die automatische Steuerung, Eingaben, die der Bediener auf der Benutzerschnittstelle 11 eingibt, oder Steuersignale, die an sonstigen Steuereinrichtungen wie Gangschaltung, Bremse, Implementsteuerungen etc. des landwirtschaftlichen Maschinensystems 1 bei einer Betätigung der betreffenden Steuereinrichtung erzeugt werden.

In Abhängigkeit vom Eintritt eines bestimmten Ereignisses oder einer Ereigniskombination, die von der Ereignisdetektionseinheit 5 ermittelt wurde, wird dann von der Aktivierungseinheit 6 ein entsprechender Befehl an die Positionsdatenbearbeitungseinrichtung 4 übermittelt, so dass die Aufzeichnung von Fahrwegdaten WD entweder durchgeführt oder nicht durchgeführt wird, d. h. die Aufzeichnung wird von Fahrwegdaten WD automatisch aktiviert oder deaktiviert.

Über die Benutzerschnittstelle 11 kann der Fahrer die Ereignisdetektionseinheit 5 und die Aktivierungseinheit 6 auch konfigurieren, d. h. er kann festlegen, bei welchen Ereignissen bzw, Ereigniskombinationen eine automatische Fahrwegaufzeichnung stattfindet oder nicht.

Zusätzlich kann der Bediener beispielsweise über die Benutzerschnittstelle 11 beim Auftreten bestimmter Ereignisse während des Fahrwegs Markierungen M setzen. Diese Markierungen M werden ebenfalls in der Speichereinrichtung 7 hinterlegt. Dabei werden zum einen die aktuellen Positionsdaten PD, welche von der Positionsdatenermittlungseinrichtung 8 zum Zeitpunkt der Markierung M ermittelt wurden, gespeichert. Des Weiteren werden auch damit zusammenhängend ereignisspezifische Ergänzungsdaten ED gespeichert, welche zum einen informationen über den aktuellen Fahrer und den Zeitpunkt der Markierung M enthalten, aber vor allem auch Zusatzinformationen, die helfen, die Position eindeutig wiederzufinden, an der die Markierung M gesetzt wurde, Beispielsweise werden automatisch die aktuell abgefahrene Fahrspur bzw. -reihe (d.h, eine entsprechende Kennung bzw. Nummer) sowie die Fahrtrichtung und ggf. weitere Informationen, die der Benutzer auch über die Benutzerschnittstelle 11 eingeben kann, zugeordnet zur Markierung gespeichert.

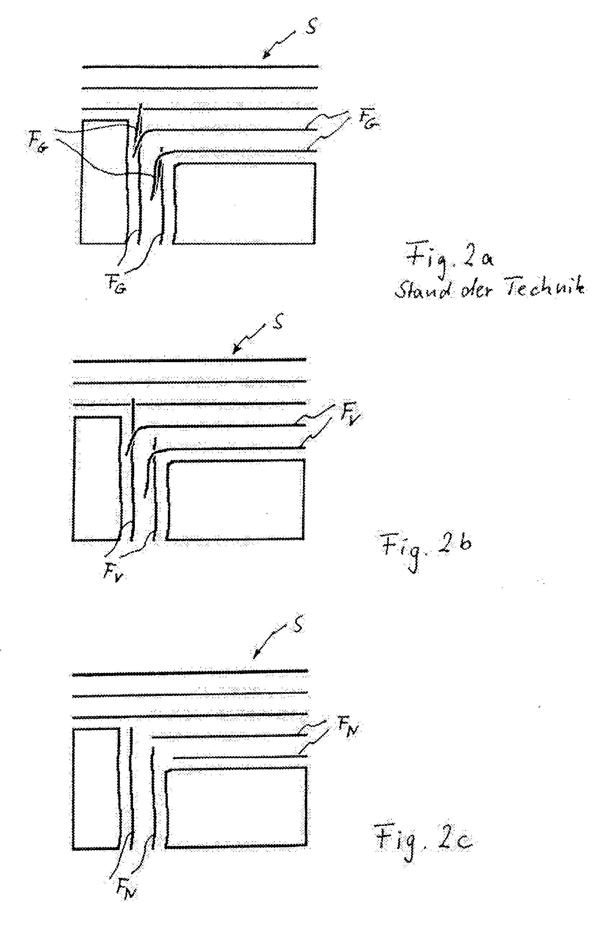

In den Figuren 2a bis 2c ist dargestellt, wie mit Hilfe einer ereignisgesteuerten Fahrwegaufzeichnung Speicher- und Rechenkapazität eingespart werden können. Figur 2a zeigt zunächst mit einem Mähdrescher abgefahrene Fahrstrecken auf einem Schlag S, wie sie derzeit nach dem Stand der Technik aufgezeichnet werden. Dabei werden die kompletten gefahrenen Gesamtfahrspuren F_{G} aufgezeichnet, welche zum einen die Nutzfahrten, zum anderen aber auch die beim Abbiegen nach rechts in eine neue Fahrspur jeweils erforderlichen kurzzeitigen Rückwärtsfahrten umfassen.

Figur 2b zeigt im Vergleich dazu dieselbe Situation auf demselben Schlag S, wobei hier jedoch eine ereignisgesteuerte Aktivierung der Fahrwegaufzeichnung durchgeführt wurde. Eingestellt wurde hierbei die Aktivierungseinheit derart, dass die Fahrspur nur während einer Vorwärtsfahrt des Mähdreschers aufgezeichnet wurde. Dementsprechend sind hier nur die Vorwärtsfahrspuren F_{V} der abgefahrenen Strecke aufgezeichnet worden.

Figur 2c zeigt eine noch stärker reduzierte Variante, bei der als auslösendes Ereignis auf die Stellung des Vorsatzgeräts abgestellt wurde, Im Ergebnis werden dabei folglich nur die eigentlichen Nutzfahrspuren F_{N} aufgezeichnet, welche tatsächlich notwendig sind, um den betreffenden Schlag S abzuernten. Alle überflüssigen Zusatzfahrten, die jeweils zum Verschwenken des Mähdreschers 1 nach rechts nötig sind, wurden hier gar nicht erst aufgezeichnet, da sie für eine weitere Routenplanung insbesondere für andere Maschinensysteme oder zur Darstellung optimaler Fahrspuren bei einer späteren Führung des Fahrers mit Hilfe einer Anzeige nicht notwendig sind, sondern eher stören würden.

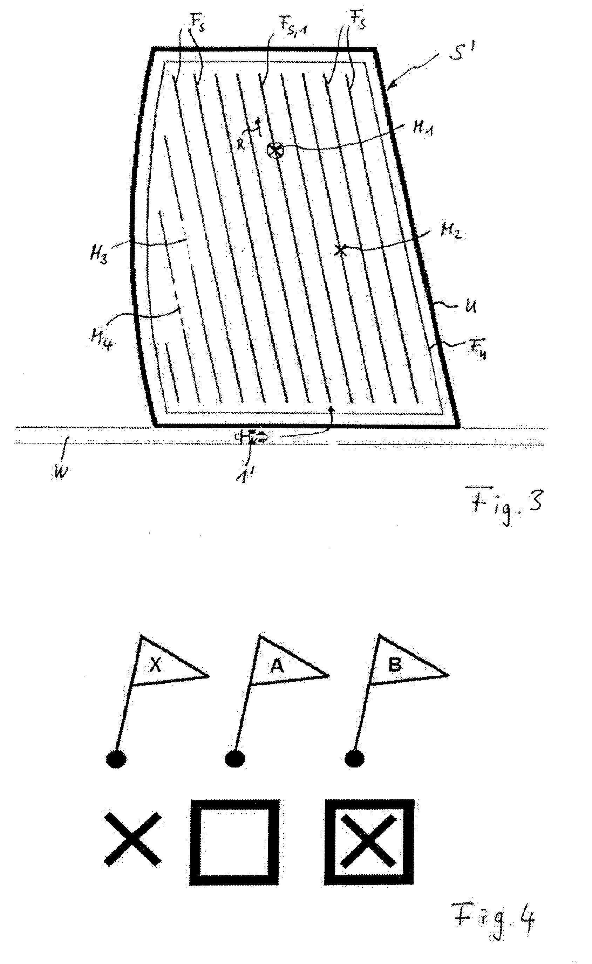

Figur 3 zeigt ein Beispiel wie mit Hilfe von geeigneten Markierungen, bei denen ereignisspezifische Ergänzungsdaten mit aufgezeichnet wurden, bestimmte markierte Positionen eindeutig identifiziert und leicht wieder angefahren werden können. Beispielsweise könnte das in Figur 3 dargestellte Bild dem Fahrer eines Maschinensystems auf einem Display angezeigt werden. Dargestellt ist hier ein Schlag S', wobei von diesem Schlag S' zum einen die äußere Umrandung U und zum anderen die Fahrwegumrandung F_{U} gezeigt sind. Außerdem sind die parallel laufenden optimalen Fahrspuren F_{S} (im folgenden auch "Reihen" genannt) angezeigt, entlang deren ein Traktor 1' mit einem Spritzgerät entlang fahren sollte, um Spritzmittel optimiert auf dem Schlag S' auszubringen. Zusätzlich sind hier verschiedene Markierungen M₁, M₂, M₃, M₄ angezeigt.

Bei der ersten Markierung M₁ handelt es sich um eine Position, an der beim Ausbringen des Spritzmittels der Spritzmitteltank leer war, Der Fahrer ist deshalb mit dem Traktor 1' und dem Spritzgerät zurück zum Hof gefahren und hat den Spritzmitteltank wieder befüllt. Er muss nun genau diesen Punkt wieder finden, um dort die Arbeit fortzusetzen. Erfindungsgemäß wurden mit der Markierung M₁ nicht nur die Positionsdaten, sondern auch ereignisspezifische Ergänzungsdaten gespeichert, im vorliegenden Fall die Nummer der Reihe bzw, Fahrspur F_{S,1} und die Fahrtrichtung R, in die sich der Traktor 1' bewegt hat, als das Ereignis eingetreten ist. Wenn sich der Traktor 1' noch auf einem Feldweg W zur Hinfahrt zum Schlag S' befindet, kann so dem Fahrer bereits rechtzeitig durch ein geeignetes Spurführungsgerät angezeigt werden, von welcher Seite des Schlages S' aus er in welche Reihe F_{S,1} hineinfahren muss, um den markierten Punkt M₁ richtig wieder anzufahren und die Arbeit von dort aus fortzusetzen. Dies kann, wie in Figur 3 gezeigt, in einem Übersichtsplan aber auch in einer beliebigen anderen Darstellung erfolgen, wie sie z. B. von KFZ-Navigationssystemen her bekannt sind. Entsprechende Darstellungs- und Anzeigemöglichkeiten sind auch aus der bereits genannten EP 0 860 688 B1 bekannt, auf die hier ebenfalls voll inhaltlich verwiesen wird.

Um das Finden eines Punktes weiter zu unterstützen, kann dabei auch der Anzeigebereich so eingestellt werden, dass immer nur der Feldausschnitt zu sehen ist, in dem sich das Fahrzeug und die Fahrspur mit der Markierung befinden. Ist die Markierung mit einer GrÖßenangabe gespeichert, beeinflusst das ggf. ebenfalls die Anzahl der betroffenen Fahrspuren. Je nach Größe der Markierung können dann auch mehrere Fahrspuren angezeigt werden, die von der vergrößerten Markierung abgedeckt werden.

Weitere in Figur 3 dargestellte beispielhafte Markierungen sind eine Markierung M₂, an der sich ein Gullydeckel befindet, welcher von einem Fahrzeug zu umfahren ist, oder größere markierte Bereiche M₃, M₄, welche anzeigen, dass an diesen Stellen besondere Eigenschaften entlang der Fahrspur F_{S} aufgetreten sind, beispielsweise, dass hier der Acker besonders feucht war.

Besonders bevorzugt werden die verschiedenen Wegmarkierungen entsprechend ihrer Eigenschaften, z. B. basierend auf den erfindungsspezifischen Ergänzungsdaten, auch auf einer Anzeige dargestellt. Wie anhand von Figur 3 bereits erläutert, lassen sich Markierungen mit einer Vielzahl an Merkmalen oder Eigenschaften abspeichern. Um diese auch dem Fahrer zu verdeutlichen, können die Markierungen bei der Anzeige mit verschiedenen Symbolen oder unterschiedlicher Angaben versehen werden. Beispiele sind hierfür eine farbliche Unterscheidung der Markierungen auf einem Display oder Piktogramme, wie sie z. B. in Figur 4 dargestellt sind. Dabei werden bestimmte Symbole entsprechend der jeweiligen ereignisspezifischen Erganzungsdaten der Markierung zugeordnet, um so dem Bediener zusätzlich den Informationsgehalt der entsprechenden Markierung zu verdeutlichen und ihm die Auswahl und Anfahrt eines Punktes mit einer solchen Markierung zu erleichtern.

Es wird abschließend noch einmal darauf hingewiesen, dass es sich bei den in Figuren dargestellten Maschinensystemen und Fahrwegaufzeichnungseinrichtungen sowie den im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

### Bezugszeichenliste

1 landwirtschaftliches Maschinensystem
1' Traktor
2 Fahrwegaufzeichnungseinrichtung
3 Prozessor
4 Positionsdatenbearbeitungseinrichtung
5 Ereignisdetektionseinheit
6 Aktivierungseinheit
7 Speichereinrichtung
8 Positionsdatenermittlungseinrichtung
9 Sensor
10 automatische Fahrsteuerung / Lenkautomat
11 Benutzerschnittstelle
11_{D} Anzeigebereich
11_{T} Tasten
F_{N} Nutzfahrspuren
F_{V} Vorwärtsfahrspuren
F_{G} Gesamtfahrspuren
F_{U} Fahrwegumrandung
F_{S} Fahrspur / Reihe
F_{S,1} Fahrspur / Reihe
R Fahrtrichtung
U Umrandung
W Feldweg
PS Positionssatellit
PD Positionsdaten
WD Fahrwegdaten
SW Sensorwert
ED ereignisspezifische Ergänzungsdaten
S, S' Schlag
M, M₁, M₂, M₃, M₄ Markierung

## Patentansprüche

1. Verfahren zur Aufzeichnung von Fahrwegdaten (WD) eines landwirtschaftlichen Maschinensystems (1) auf einem zu bearbeitenden Territorium (S, S'), bei dem während einer Fahrt des landwirtschaftlichen Maschinensystems (1) kontinuierlich oder in zeichen Abständen automatisch aktuelle Positionsdaten (PD) des Maschinensystems (1) erfasst werden und auf den erfassten Positionsdaten (PD) basierende Fahrwegdaten (WD), welche den vom Maschinensystem (1) abgefahrenen Fahrweg (FG, FV, FN) repräsentieren, in einer Speichereinrichtung (7) hinterlegt werden,
wobei eine Aktivierung der Aufzeichnung der Fahrwegdaten (WD) automatisch ereignisgesteuert erfolgt, und bei dem die ereignisgesteuerte Aufzeichnung der Fahrwegdaten (WD) in der Weise erfolgt, dass nur die Fahrwegdaten (WD) von Vorwärtsfahrspuren (FV) und/oder von Nutzfahrspuren (FN) aufgezeichnet werden.

2. Verfahren nach Anspruch 1, bei dem während einer Fahrt des landwirtschaftlichen Maschinensystems (1) kontinuierlich oder in zeitlichen Abständen Sensorwerte (SW) gemessen werden, die einen Maschinenzustand oder einen Zustand des zu bearbeitenden Territoriums (S, S') repräsentieren, und dass eine Aktivierung der Aufzeichnung der Fahrwegdaten in Abhängigkeit von ermittelten Sensorwerten (SW) erfolgt.

3. Verfahren nach einem der Ansprüche 1 bis 2, bei dem eine Aktivierung der Aufzeichnung der Fahwegdaten (WD) in Abhängigkeit von einer Fahrtrichtung und/oder in Abhängigkeit von einer Betriebsart des Maschinensystems (1) und/oder in Abhängigkeit von einer dem Maschinensystems (1) zugeordneten Eigenschaft erfolgt.

4. Verfahren nach einem der Ansprüche 1 bis 3, bei dem eine Aktivierung der Aufzeichnung der Fahrwegdaten (WD) in Abhängigkeit von einem überfahrenen Bereich des Territoriums (S, S') erfolgt.

5. Verfahren nach einem der Ansprüche 1 bis 4, bei dem die ereignisgesteuerte automatische Aktivierung von einem Bediener konfigurierbar ist.

6. Verfahren nach einem der Ansprüche 1 bis 5, bei dem bei Auftreten eines Ereignisses während eines Fahrt- und/oder Arbeitsvorganges auf dem Territorium eine Markierung (M, M1, M2, M3, M4) gesetzt wird, indem Positionsdaten für den Ort des Ereignisses ermittelt und gespeichert werden, und wobei, dieser Markierung (M, M1, M2, M3, M4) zugeordnet, zusätzlich ereignisspezifische Ergänzungsdaten (ED) zur eindeutigen Identifizierung des Ereignisses gespeichert werden.

7. Verfahren nach Anspruch 6, bei dem die ereignisspezifischen Ergänzungsdaten (ED) Informationen über eine Bearbeitungsfahrspur (FS,1) und/oder über eine die Fahrtrichtung (R) und/oder über den Zeitpunkt und/oder über einen Bediener des Maschinensystems (M) zum Zeitpunkt der Markierung (M1) umfassen.

8. Verfahren zur Steuerung eines landwirtschaftlichen Maschinensystems (1) auf einem zu bearbeitenden Territorium (S, S') während eines Fahrt- und/oder Arbeitsvorganges mittels eines Routen-Anzeigesystems und/oder einer automatischen Fahrsteuerung (10), bei dem das Routen-Anzeigesystem und/oder die automatische Fahrsteuerung (10) auf Basis der gemäss einem Verfahren nach einem der Ansprüche 1 bis 7 aufgezeichneten Fahrwegdaten (WD) gesteuert werden.

9. Verfahren nach Anspruch 8, bei dem zum Wiederanfahren einer geographischen Position, an der gemäss einem Verfahren nach Anspruch 6 oder 7 eine Markierung (M. M1, M2, M3, M4) gesetzt wurde, das Routen-Anzeigesystem und/oder die automatische Fahrsteuerung (10) auf Basis der Positionsdaten der Markierung (M, M1, M2, M3, M4) und unter Nutzung der der Markierung (M, M1, M2, M3, M4) zugeordneten ereignisspezifischen Ergänzungsdaten (ED) gesteuert werden.

10. Fahrwegaufzeichnungseinrichtung (2) zur Aufzeichnung von Fahrwegdaten (WD) eines landwirtschaftlichen Maschinensystems (1) auf einem zu bearbeitenden Territorium (S, S'), mit
- einer Positionsdatenermittlungseinrichtung (8), um automatisch aktuelle Positionsdaten (PD) des Maschinensystems (1) zu erfassen,
- einer Positionsdatenbearbeitungseinrichtung (4), um basierend auf den erfassten Positionsdaten (PD) Fahrwegdaten (WD) zu ermitteln, welche einen vom Maschinensystem (1) abgefahrenen Fahrweg (FG, FV, FN) repräsentieren,
- einer Speichereinrichtung (7) für die Fahrwegdaten (WD),
- einer Ereignisdetektionseinheit (5), um ein Eintreten bestimmter Ereignisse zu detektieren,
- und einer Aktivierungseinheit (6), welche in Abhängigkeit vom Eintritt eines bestimmten Ereignisses oder einer Ereigniskombination eine Aufzeichnung von Fahrwegdaten (WD) automatisch aktiviert oder deaktiviert, wobei nur die Fahrwegdaten (WD) von Vorwärtsfahrspuren (FV) und/oder Nutzfahrspuren (FN) aufgezeichnet werden.

## Claims

1. A method of recording travel path data (WD) of an agricultural machine system (1) on a territory (S, S') to be worked, in which during a travel of the agricultural machine system (1) current position data (PD) of the machine system (1) are automatically detected continuously or at time spacings and travel path data (WD) which are based on the detected position data (PD) and which represent the travel path (FG, FV, FN) travelled by the machine system (1) are stored in a memory device (7),
wherein activation of the recording of the travel path data (WD) is effected automatically in event-control fashion and in which the event-control recording of the travel path data (WD) is effected in such a way that only the travel path data (WD) of forward travel tracks (FV) and/or working travel tracks (FN) are recorded.

2. A method according to claim 1 wherein during a travel of the agricultural machine system (1), sensor values (SW) are measured continuously or at time intervals, which sensor values represent a machine condition or a condition of the territory (S, S') to be worked, and activation of the recording of the travel path data is effected in dependence on determined sensor values (SW).

3. A method according to one of claims 1 and 2 in which activation of the recording of the travel path data (WD) is effected in dependence on a direction of travel and/or in dependence on a mode of operation of the machine system (1) and/or in dependence on a property associated with the machine system (1).

4. A method according to one of claims 1 to 3 in which activation of the recording of the travel path data (WD) is effected in dependence on a region of the territory (S, S'), over which the machine system has passed.

5. A method according to one of claims 1 to 4 in which the event-controlled automatic activation can be configured by an operator.

6. A method according to one of claims 1 to 5 in which upon the occurrence of an event during a travel and/or working operation on the territory a marker (M, M1, M2, M3, M4) is set by position data for the location of the event being determined and stored, and wherein, associated with said marker (M, M1, M2, M3, M4) event-specific supplemental data (ED) are additionally stored for uniquely identifying the event.

7. A method according to claim 6 in which the event-specific supplemental data (ED) include items of information about a working travel track (FS, 1) and/or about the travel direction ® and/or about the moment in time and/or about an operator the machine system (M) at the moment of the marker (M1).

8. A method of controlling an agricultural machine system (1) on a territory (S, S') to be worked during a travel and/or working operation by means of a route display system and/or an automatic travel control means (10), in which the route display system and/or the automatic travel control means (10) are controlled on the basis of the travel path data (WD) recorded by a method according to one of claims 1 to 7.

9. A method according to claim 8 in which to travel to a geographical position again, at which a marker (M, M1, M2, M3, M4) was set by a method according to claim 6 or claim 7, the route display system and/or the automatic travel control means (10) are controlled on the basis of the position data of the marker (M, M1, M2, M3, M4) and using the event-specific supplemental data (ED) associated with the marker (M, M1, M2, M3, M4).

10. A travel path recording apparatus (2) for recording travel path data (WD) of an agricultural machine system (1) on a territory (S, S') to be worked, comprising
- a position data determining device (8) for automatically detecting current position data (PD) of the machine system (1),
- a position data processing device (4) for determining on the basis of the detected position data (PD) travel path data (WD) which represent a travel path (FG, FV, FN) travelled by the machine system (1),
- a memory device (7) for the travel path data (WD),
- an event detection unit (5) for detecting an occurrence of given events, and
- an activation unit (6) which automatically activates or deactivates a recording of travel path data (WD) in dependence on the occurrence of a given event or a combination of events, wherein only the travel path data (WD) of forward travel tracks (FV) and/or working travel tracks (FN) are recorded.

## Revendications

1. Procédé d'enregistrement de données de voie de circulation (WD) d'un système de machine agricole (1) sur un territoire (S, S') à travailler, dans lequel des données de position courante (PD) du système de machine (1) sont détectées automatiquement en continu ou à intervalles réguliers pendant un déplacement du système de machine agricole (1), et des données de voie de circulation (WD), basées sur les données de position (PD) détectées et représentant la voie de circulation (FG, FV, FN) parcourue par le système de machine (1), sont enregistrées dans un dispositif de stockage (7), une activation de l'enregistrement des données de voie de circulation (WD) étant effectuée automatiquement en fonction d'événements et l'enregistrement des données de voie de circulation (WD) en fonction d'événements étant réalisé de façon que seules les données de voie de circulation (WD) de voies de circulation en marche avant (FV) et/ou de voies de circulation utiles (FN) soient enregistrées.

2. Procédé selon la revendication 1, dans lequel des valeurs de capteur (SW), qui représentent un état de machine ou un état du territoire (S, S') à travailler, sont mesurées en continu ou à intervalles réguliers pendant un déplacement du système de machine agricole (1), et une activation de l'enregistrement des données de voie de circulation est effectuée en fonction des valeurs de capteur (SW) déterminées.

3. Procédé selon une des revendications 1 à 2, dans lequel une activation de l'enregistrement des données de voie de circulation (WD) est effectuée en fonction d'un sens de déplacement et/ou en fonction d'un mode de fonctionnement du système de machine (1) et/ou en fonction d'une propriété associée au système de machine (1).

4. Procédé selon une des revendications 1 à 3, dans lequel une activation de l'enregistrement des données de voie de circulation (WD) est effectuée en fonction d'une région parcourue du territoire (S, S').

5. Procédé selon une des revendications 1 à 4, dans lequel l'activation automatique en fonction d'événements est configurable par un opérateur.

6. Procédé selon une des revendications 1 à 5, dans lequel, en cas de survenue d'un événement pendant un processus de déplacement et/ou de travail sur le territoire, un marquage (M, M1, M2, M3, M4) est placé en déterminant et enregistrant des données de position pour le lieu de l'événement, et des données complémentaires (ED) spécifiques à l'événement, associées à ce marquage (M, M1, M2, M3, M4), sont enregistrées en plus pour identifier l'événement de manière univoque.

7. Procédé selon la revendication 6, dans lequel les données complémentaires (ED) spécifiques à l'événement comprennent des informations sur une voie de circulation de travail (FS, 1) et/ou sur un sens de déplacement (R) et/ou sur l'instant et/ou sur un opérateur du système de machine (M) à l'instant du marquage (M1).

8. Procédé de commande d'un système de machine agricole (1) sur un territoire (S, S') à travailler pendant un processus de déplacement et/ou de travail au moyen d'un système d'affichage d'itinéraire et/ou d'une commande automatique de déplacement (10), dans lequel le système d'affichage d'itinéraire et/ou la commande automatique de déplacement (10) sont commandés sur la base des données de voie de circulation (WD) enregistrées conformément à un procédé selon une des revendications 1 à 7.

9. Procédé selon la revendication 9, dans lequel, pour rejoindre une position géographique à laquelle un marquage (M, M1, M2, M3, M4) a été placé conformément à un procédé selon la revendication 6 ou 7, le système d'affichage d'itinéraire et/ou la commande automatique de déplacement (10) sont commandés sur la base des données de position du marquage (M, M1, M2, M3, M4) et en exploitant les données complémentaires (ED) spécifiques à l'événement associées au marquage (M, M1, M2, M3, M4).

10. Dispositif d'enregistrement de voies de circulation (2) pour enregistrer des données de voie de circulation (WD) d'un système de machine agricole (1) sur un territoire (S, S') à travailler, comportant
- un dispositif de détermination de données de position (8) pour détecter automatiquement des données de position courante (PD) du système de machine (1),
- un dispositif de traitement de données de position (4) pour, sur la base des données de position (PD) détectées, déterminer des données de voie de circulation (WD) qui représentent une voie de circulation (FG, FV, FN) parcourue par le système de machine (1),
- un dispositif de stockage (7) pour les données de voie de circulation (WD),
- une unité de détection d'événements (5) pour détecter la survenue de certains événements,
- et une unité d'activation (6) qui, en fonction de la survenue d'un certain événement ou d'une combinaison d'événements, active ou désactive automatiquement un enregistrement de données de voie de circulation (WD), seules les données de voie de circulation (WD) de voies de circulation en marche avant (FV) et/ou de voies de circulation utiles (FN) étant enregistrées.
